Europäisches Patentamt

European Patent Office

Office européen des brevets

(19)

(11) Veröffentlichungsnummer: **0 017 796**
**B1**

(12) **EUROPÄISCHE PATENTSCHRIFT**

(45) Veröffentlichungstag der Patentschrift: **22.02.84**

(51) Int. Cl.³: **B 01 D 53/34**

(21) Anmeldenummer: **80101514.0**

(22) Anmeldetag: **22.03.80**

(54) Verfahren zur Abscheidung von Spuren gasförmiger Schadstoffe aus Abgasen durch chemische Absorption.

(30) Priorität: **03.04.79 DE 2913329**

(43) Veröffentlichungstag der Anmeldung:
**29.10.80 Patentblatt 80/22**

(45) Bekanntmachung des Hinweises auf die Patenterteilung:
**22.02.84 Patentblatt 84/8**

(84) Benannte Vertragsstaaten:
**AT BE CH FR GB IT LU NL SE**

(56) Entgegenhaltungen:
**DE - A - 1 924 990**
**DE - A - 2 060 639**
**DE - A - 2 109 146**
**DE - A - 2 231 199**
**DE - A - 2 238 801**
**DE - A - 2 241 623**
**DE - A - 2 314 808**
**DE - A - 2 449 057**
**DE - A - 2 545 342**
**DE - A - 2 743 267**
**DE - C - 899 645**
**US - A - 3 345 125**

(73) Patentinhaber: **DECHEMA Deutsche Gesellschaft für chemisches Apparatewesen e.V.**
**Theodor-Heuss-Allee 25**
**D-6000 Frankfurt am Main 97 (DE)**

(72) Erfinder: **Kirchner, Kurt, Dipl.-Chem.**
**Im Wingert 33**
**D-6236 Eschborn/Ts. (DE)**
Erfinder: **Litzenburger, Wolfgang, Dipl.-Ing.**
**Bachweg 3**
**D-6581 Herrstein (DE)**

(74) Vertreter: **Beil, Walter, Dr. et al,**
**BEIL, WOLFF & BEIL Rechtsanwälte**
**Adelonstrasse 58**
**D-6230 Frankfurt am Main 80 (DE)**

Courier Press, Leamington Spa, England.

Verfahren zur Abscheidung von Spuren gasförmiger Schadstoffe aus Abgasen durch chemische Absorption

Die Erfindung betrifft ein Verfahren zur Abscheidung von Spuren gasförmiger Schadstoffe auf Basis von Halogen und/oder Schwefel und/oder deren Verbindungen aus Abgasen durch chemische Absorption.

Abgase, die beim Betreiben von chemischen Industrieanlagen wie Zellstoff-Fabriken Kläranlagen, Kernkraftwerken und ähnlichen Anlagen anfallen, enthalten in der Regel gasförmige Schadstoffe, die je nach chemischer Zusammensetzung übelriechend, unangenehm, gesundheitsschädlich oder toxisch sein können und somit eine Belastung der Umwelt darstellen. Sie müssen deshalb aus den Abgasen entfernt werden.

Bei den in vorstehend genannten Industrieanlagen anfallenden gasförmigen Schadstoffen handelt es sich in der Hauptsache um schwefel- oder halogenhaltige Verbindungen.

Insbesondere fallen $H_2S$, Thiole, HCl, HBR, HI, Chlor, Brom oder Iod an.

Eines der bisher am häufigsten angewandten Verfahren zur Entfernung von Schadstoffen der vorstehend genannten Art aus Abgasen stellt das Absorptionsverfahren dar.

Zur Reinigung von Abgasen geeignete Absorptionsverfahren sind dadurch gekennzeichnet, daß sie mit Waschflüssigkeiten arbeiten.

Um beispielsweise die Geruchsbelästigung von schwefelhaltigen gasförmigen Schadstoffen aus Abgasen zu beseitigen, müssen kleinste Spuren derselben entfernt werden, da der Geruchsschwellenwert, insbesondere der Thiole, sehr niedrig liegt, beispielsweise bei Ethanthiol bei $1,6 \times 10^{-5}$—$2 \times 10^{-3}$ ppm.

Ebenso müssen kleinste Spuren von aus Abgasen von Kernkraftwerken stammenden Iod wegen ihrer Radioaktivität beseitigt werden.

Zur Verbesserung des Wirkungsgrades derartiger Absorptionsverfahren, insbesondere zur Entfernung von Spuren, stellt die oxidative Gaswäsche bei oxidierbaren Schadstoffen eine gebräuchliche Methode dar (siehe VDI-Richtlinien-Entwurf, VDI 2443, 1977, Abgasreinigung durch oxidierende Gaswäsche).

Dabei kann sowohl mit leicht flüchtigen Oxidationsmitteln wie Chlor, Chlordioxid und Ozon, als auch mit nichtflüchtigen Oxidationsmitteln, wie $H_2O_2$, Natriumchlorit und Kaliumpermanganat, gearbeitet werden.

Beim Arbeiten mit leicht flüchtigen Oxidationsmitteln findet eine rasche Oxidation der in der Waschflüssigkeit gelösten Schadstoffe statt, jedoch besitzt diese Methode den Nachteil, daß bei schwankenden Schadstoffmengen im Abgas eine stöchiometrische Dosierung dieser flüchtigen Stoffe äußerst schwierig ist und dadurch überschüssiges Oxidationsmittel emittiert, wodurch das Abgasproblem nicht beseitigt wird, sondern im Gegenteil, zu einem zusätzlichen gesundheitsschädigenden Problem wird.

Durch Arbeiten mit nichtflüchtigen Oxidationsmitteln wird das vorstehende Problem zwar weitestgehend ausgeschaltet, jedoch besitzt diese Methode wiederum den Nachteil, daß das Reaktionsvermögen oft zu gering ist und dadurch keine rasche Oxidation stattfinden kann.

Eine weitere bekannte und gebräuchliche Ausführungsform des Absorptionsverfahrens stellt die alkalische Wäsche dar, die auch bei Schadstoffen wir Chlor, Brom und Iod, angewandt werden kann.

Dies Verfahren besitzt jedoch den Nachteil, daß auch in der Abluft vorhandenes $CO_2$ mit ausgewaschen wird, was unerwünscht ist.

Ein kominiertes Verfahren aus Oxidation und alkalischer Wäsche wird von Kurmeier, H.; Gesundheits-Ing. 92 (1971) 6, 169—173, beschrieben.

In der DE—OS—20 60 639 wird ein Verfahren zur Reinigung von Rauch aus Gasen beschrieben, bei dem als Schwefelverbindung $SO_2$ durch Bildung leicht löslicher Eisensalze abgeschieden wird, die unter anderem dadurch abgetrennt werden können, daß man sie anschließend (in einer weiteren Stufe) in schwerlösliche Eisenverbindungen überführt. Es findet dort Oxidation von Fe-II-sulfat zu Fe-IIIsulfat mit Luftsauerstoff statt.

Die DE—OS—22 31 199 betrifft ein Verfahren zur Entfernung von Schwefelsäure aus einem Gasstrom mit einer wäßrigen Fe-II-sulfat- und Fe-III-sulfatlösung. Dabei kann in dem zu reinigenden Gasstrom neben der zu entfernenden Schwefelsäure auch $H_2S$ vorhanden sein, jedoch bilden sich dort ebenfalls keine schwerlöslichen Sulfide und es wird bei einem sauren pH-Wert (pH 2 bis 3) gearbeitet. Über den Ablauf derartiger Reaktionen vgl. Klemm-Fischer, Experimentelle Einführung in die anorganische Chemie, 63.—70. Aufl., De Gruyter, Berlin 1971, S. 140.

Der Erfindung liegt somit die Aufgabe zugrunde, ein Absorptionsverfahren zu entwickeln, mit dessen Hilfe selbst kleinste Spuren gasförmiger Schadstoffe, und zwar Thiole, $H_2S$, HCl, HBr, HI, Chlor, Brom und/oder Iod, rasch aus Abgasen abgeschieden werden können, ohne daß zusätzliche Abgas- bzw. Umweltprobleme geschaffen werden.

Diese Aufgabe wird erfindungsgemäß dadurch gelöst, daß man den sie Schadstoffe in Spuren von bereits 10 ppm enthaltenden Gasstrom durch eine neutrale Waschflüssigkeit leitet, die Schwermetallionen enthält, die mit den jeweils zu entfernenden Schadstoffen schwer lösliche Verbindungen zu bilden vermögen, wobei im Falle von Thiolen und/oder $H_2S$ als Schadstoffe die sich bildenden Schwermetallverbindungen mittels Zusatz von Ozon zur Waschflüssigkeit regeneriert werden, und wobei im Falle von Thiolen, $H_2S$, HCl, HBr, HJ, Chlor, Brom und/oder Jod als Schadstoffe man Elektroden einführt, wobei die Anode aus einem Schwermetall besteht, das als Kation mit dem jeweils zu entfernenden Schadstoff eine schwer lösliche Verbindung zu bilden vermag und die Schadstoffe auf elektrochemischem Wege abscheidet.

Aus Biltz, Klemm, Fischer, Experimentelle Einführung in die Anorganische Chemie, Walter de Gruyter & Co., Berlin 1971; Ryland, L. B., Tamele, M. W., Anal. Chem. of Sulfur and its Compounds 1970, 1, 465—519, Wiley-Intersci., New York, und Moore, H., Helwig, H. L., Amer.Ind.Hygiene Assoc. J. 21, 466 (1960) ist bekannt, daß gewisse Schwermetallionen mit Schwefel, Chlor, Brom und Iod schwerlösliche Sulfide, Chloride, Bromide und Iodide zu bilden vermögen.

Da in Gaswäschern zur Abgasreinigung aus Gründen der Anlagendimensionierung jedoch geringe Verweilzeiten des Gases erwünscht sind, ist es erforderlich, daß die Absorption der Schadstoffe sehr schnell erfolgt Der Fachmann konnte somit nicht voraussehen, daß Spuren der gasförmigen Schadstoffe unter Bildung von schwerlöslichen Metallverbindungen noch unter wirtschaftlich vertretbaren Betriebsbedingungen praktisch vollständig aus Abgasströmen zu entfernen sein würden.

Es war deshalb überraschend, daß es mit Hilfe der Erfindung möglich war, bei Gasverweilzeiten von nur 0,5—1 s bzw. unter 3 s in Beispiel 6 Spuren der Schadstoffe, die im ppm-Bereich liegen, nahezu vollständig abzuscheiden.

Beispiele für Schwermetallionen, die mit den genamten Schadstoffen schwerlösliche Salze zu bilden vermögen, sind Silber, Kupfer, Cadmium, Zink und Quecksilber. Besonders bevorzugt werden Kupfer und Silber. Letzteres insbesondere, weil es mit sämtlichen der genannten Schadstoffe schwerlösliche Salze bildet.

Das erfindungsgemäße Verfahren besitzt außer den vorstehend bereits genannten Vorteilen gegenüber bekannten Verfahren den Vorteil, daß sich die schwerlöslichen Schwermetallverbindungen regenerieren lassen, wobei das eventuell wertvolle Schwermetall wieder zurückgewonnen werden kann. Dabei kann die Regeneration entweder schon direkt im Waschprozess oder nach Abtrennung (z.B. Filtration) der Schwermetallverbindung erfolgen. ⸱

Der Waschprozess im Falle von Thiolen und/oder $H_2S$ kann einfach dadurch erfolgen, daß man das zu reinigende Abgas durch eine wäßrige Lösung einer löslichen Verbindung des Schwermetalls leitet, dabei kann sowohl im Gegenstrom als auch im Gleichstrom gearbeitet werden, und daß man die sich bildenden Schwermetallverbindungen durch Ozon wieder aufoxidiert bzw. regeneriert. Dadurch läßt sich der Schwermetallverbrauch stark reduzieren.

Die Oxidation erfolgt zweckmäßigerweise dadurch, daß die Waschflüssigkeit in einen zweiten Reaktor geleitet wird, in den mann dann einen ozonhaltigen Gasstrom einleitet.

Eine bevorzugte lösliche Verbindung ist beispielsweise $AgNO_3$. Je nach Fahrweise des Wäschers sollte die Sibernitratkonzentration zwischen $10^{-1}$ und $10^{-4}$ Mol/l liegen.

Im Falle von HCl, HBr, Hi, Chlor, Brom und/oder Iod erfolgt die Abscheidung auf elektrochemischen Wege. Hierbei werden die Schwermetallionen mit Hilfe von Elektroden, wobei mindestens die Anode aus dem entsprechenden Schwermetall besteht, die in die Waschlösung eingebracht werden, erzeugt.

Vorzugsweise können auch Thiole und/oder $H_2S$ auf diesem Wege abgeschieden werden.

Dieses Verfahren besitzt den zusätzlichen Vorteil, daß die Abscheidung beschleunigt werden kann und daß die Metallionen ohne Beladung des Wassers mit Anionen in die Waschlösung eingebracht werden können. Dies bedeutet eine weitere Reduzierung der Umweltbelastung, nämlich dahingehend, daß aus dem Abluftproblem nicht plötzlich ein Abwasserproblem wird.

Die Konzentration der in Lösung gehenden Metallionen kann durch Variation des zwischen den Elektroden fließenden Stromes gesteuert werden. Die sich dabei einstellende Elektrodenspannung darf die anodische Sauerstoffüberspannung nicht überschreiten. Nach diesen Kriterien ist die Elektrodenfläche auszulegen.

Nachstehende Beispiele dienen der weiteren Erläuterung der Erfindung.

Beispiel 1

Ein ethanthiolhaltiger Gasstrom (Eingangskonzentration 20 ppm, Gasdurchsatz 2 1/min) wurd 6 Stunden lang durch eine Laborblasensäule, die eine wäßrige etwa 0,5 m-$AgNO_3$-Lösung (250 ml) enthielt, geleitet. Dabei bildete sich ein dunkler Niederschlag. Die wäßrige Lösung blieb während des Versuches klar. Im Gasausgang konnte gaschromatographisch kein Ethanthiol mehr nachgewiesen werden (Umsatz >99%). Dieses Ergebnis wurde auch erzielt, wenn kontinuierlich $AgNO_3$ (äquivalent zum Thioldurchsatz) in das Waschwasser zudosiert wurde.

Beispiel 2

Fahrweise wie in Beispiel 1, jedoch ohne Zugabe von $AgNO_3$, sondern Erzeugung der $Ag^+$-Ionen durch Einführung von zwei Silbernetzen in die Lösung. Bei Anlegen einer Spannung von 2 V wurde ein Umsatz von ca. 50% erreicht, bei 10 V (Strom I≈10 mA) konnte gaschromatographisch kein Thiol mehr nachgewiesen werden. Es bildete sich in der Lösung und an der Kathode ein schwarzer Niederschlag.

Beispiel 3

Fahrweise wie in Beispiel 2, jedoch keine Erzeugung von $Ag^+$-Ionen, sondern Erzeugung

von Cu$^+$-Ionen durch Einführung von zwei Kupfer-Netzen. Nach Anlegen einer Spannung von ca. 10 V, wobei ein Strom von ca. 11 mA gemessen wurde, betrug der Thiolumsatz ca. 90%. In der Lösung bildete sich ein brauner Niederschlag.

Beispiel 4

Fahrweise wie in Beispiel 1, jedoch mit niedrigeren AgNO$_3$-Konzentrationen ($<10^{-3}$ mol/l). Die Waschlösung wurde während des Versuchs trübe. Nach Zugabe von Ozon in die Waschlösung verschwand die Trübung wieder (Regeneration der Waschflüssigkeit). Gaschromatographisch konnte ebenfalls kein Thiol mehr festgestellt werden (Umsatz $>99\%$).

Beispiel 5

Ein Spuren von Chlor enthaltender Gasstrom (kleiner als 50 ppm, Gasdurchsatz ca. 0,5 1/min) wurde 2 Stunden durch 100 ml einer neutral gepufferten Natriumbromidlösung, bestehend aus 3 m NaBr, $10^{-3}$ m NaI, 0,1 m NaH$_2$PO$_4 \cdot$ 1H$_2$O und 0,1 m Na$_2$HPO$_4 \cdot$ 2H$_2$O (vgl. Hersch und Deuringer, Analytical Chemistry, 35, 7 (1963) S. 897) geleitet, in die zwei Elektroden eingetaucht waren. Der Anodenwerkstoff war Silber, der Kathodenwerkstoff Platin, die angelegte Spannung betrug 5 V.

Die Bestimmung des Wirkungsgrades erfolgte halbquantitativ folgendermaßen: Der chlorhaltige Gasstrom wurde zunächst geteilt. Ein Teilstrom wurde direkt durch eine Methylorange-Lösung, der andere durch den Wäscher und anschließend durch eine Methylorange-Lösung geleitet. Während des Versuches mußte die vorgeschaltete Methylorange-Lösung aufgrund der Entfärbung (Indiz dafür, daß Chlor vorhanden ist) 12 mal gewechselt werden, wohingegen in der nachgeschalteten Lösung keine Farbveränderung festzustellen war.

Beispiel 6

Zur Reinigung eines ethanthiolhaltigen Gasstromes wurde als Wäscher eine Füllkörperkolonne ($\phi$ 200 mm) mit einem Schüttvolumen von 16 l (Schütthöhe der Füllkörper h$_s$=0,5 m) eingesetzt. Die Waschflüssigkeit wurde im Kreislauf geführt und in einem zweiten Reaktor mit Ozon beladen. Die Eingangskonzentration des Thiols betrug c$_{gAXMa}$=10 ppm, die Konzentration des ausgestrippten Ozons im Abgas etwa c$_{gO_3\omega}$=1 ppm. Die mittlere Verweilzeit des Gases lag unter 3 s.

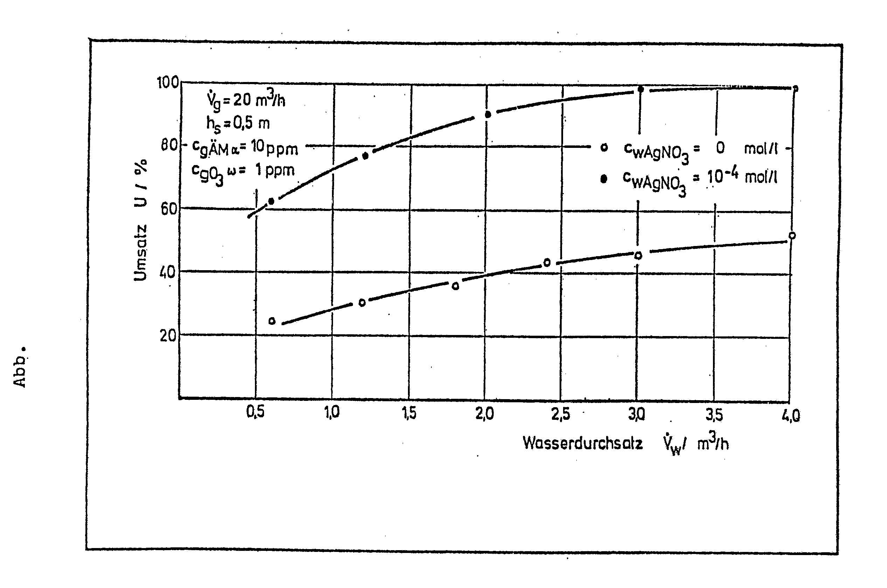

Die erhaltenen Ergebnisse sind in der Abbildung aufgetragen. Die untere Kurve beschreibt den Mercaptanumsatz, wenn mit reinem Wasser als Waschmittel gearbeitet wurde, die obere Kurve, wenn dem Wasser Silbernitrat zugegeben wurde (Silbernitratkonzentration c$_{wAgNO3}$=$10^{-4}$ Mol/l). Es ist zu erkennen, daß die Zugabe des Silbernitrates eine deutliche Verbesserung des Umsatzes bewirkt. Die Ergebnisse eines weiteren Versuches ergaben, daß der Umsatz durch Erhöhung der AgNO$_3$-Konzentration noch erheblich gesteigert werden kann.

**Patentansprüche**

1. Verfahren zur Abscheidung von Spuren gasförmiger Schadstoffe auf Basis von Schwefel und/oder deren Verbindungen aus Abgasen durch chemische Absorption, dadurch gekennzeichnet, daß man den als Schadstoffe Thiole und/oder H$_2$S in Spuren von bereits 10 ppm enthaltenden Gasstrom durch eine neutrale Waschflüssigkeit leitet, die Schwermetallionen enthält, die mit den jeweils zu entfernenden Schadstoffen schwer lösliche Verbindungen zu bilden vermögen und die schwerlöslichen Schwermetallverbindungen mittels Zusatz von Ozon zur Waschflüssigkeit regeneriert.

2. Verfahren zur Abscheidung von Spuren gasförmiger Schadstoffe auf Basis von Halogen und/oder Schwefel und/oder deren Verbindungen aus Abgasen durch chemische Absorption, dadurch gekennzeichnet, daß man den als Schadstoffe Thiole, H$_2$S, HCl, HBr, HJ, Chlor, Brom und/oder Jod in Spuren von bereits 10 ppm enthaltenden Gasstrom durch eine neutrale Waschflüssigkeit leitet, in die man Elektroden einführt, wobei die Anode aus einem Schwermetall besteht, das als Kation mit dem jeweils zu entfernenden Schadstoff eine schwer lösliche Verbindung zu bilden vermag und die Schadstoffe auf elektrochemischem Wege abscheidet.

3. Verfahren nach Anspruch 1, dadurch gekennzeichnet, daß man als Schwermetallionen Silber- oder Kupferionen verwendet.

4. Verfahren nach Anspruch 2, dadurch gekennzeichnet, daß man als Schwermetallionen Silber- oder Kupferionen verwendet.

5. Verfahren nach Anspruch 1 oder 3, dadurch gekennzeichnet, daß man laufend Schwermetallsalze bzw. Schwermetallionen der Waschflüssigkeit zusetzt.

6. Verfahren nach einem der Ansprüche 1 oder 3, dadurch gekennzeichnet, daß man die Schadstoffe auf elektrochemischem Weg abscheidet, indem man Elektroden in die Waschflüssigkeit einführt, wobei die Anode aus einem Schwermetall besteht, das als Kation mit dem zu entfernenden Schadstoff eine schwer lösliche Verbindung zu bilden vermag.

7. Verfahren nach einem der vorstehenden Ansprüche, dadurch gekennzeichnet, daß man als Waschflüssigkeit Wasser verwendet.

8. Verfahren nach einem der Ansprüche 2 oder 4, dadurch gekennzeichnet, daß man im Falle der Verwendung eines Gasstroms, der Chlor, Brom oder Iod als Schadstoffe enthält, als Waschflüssigkeit eine neutral gepufferte Natriumbromidlösung verwendet.

9. Verfahren nach einem der vorstehenden Ansprüche, dadurch gekennzeichnet, daß man die Waschflüssigkeit ganz oder teilweise im Kreislauf führt.

## Revendications

1. Procédé pour séparer par adsorption chimique, à partir de gaz d'échappement, des traces de polluants gazeux à base de soufre et/ou de ses composés, caractérisé en ce qu'on fait passer le courant de gaz, qui contient en tant que polluants des thiols et/ou $H_2S$ en des traces allant jusqu'à 10 ppm, à travers un liquide de lavage neutre qui contient des ions de métaux lourds, qui, avec les différents polluants à éliminer, peuvent former des composés difficilement solubles, et que l'on régénère les composés peu solubles des métaux lourds par addition d'ozone au liquide de lavage.

2. Procédé pour séparer par adsorption chimique, à partir de gaz d'échappement, des traces de polluants gazeux à base d'halogène et/ou de soufre et/ou leurs composés, caractérisé en ce que l'on fait passer un courant de gaz contenant en tant que polluants des thiols, $H_2S$, HCl, HBr, HI, du chlore, du brome et/ou de l'iode, en des traces allant jusqu'à 10 ppm, dans un liquide de lavage neutre dans lequel on introduit des électrodes, dans lesquelles l'anode est en un métal lourd qui, en tant que cation, peut former avec le polluant respectif à éliminer un composé difficilement soluble et sépare les polluants par voie électrochimique.

3. Procédé selon la revendication 1, caractérisé en ce que l'on utilisé en tant qu'ions de métaux lourds les ions argent ou cuivre.

4. Procédé selon la revendication 2, caractérisé en ce que l'on utilise en tant qu'ions de métaux lourds les ions argent ou cuivre.

5. Procédé selon l'une quelconque des revendications 1 ou 3, caractérisé en ce que l'on ajoute en continu des sels de métaux lourds ou des ions de métaux lourds au liquide de lavage.

6. Procédé selon l'une quelconque des revendications 1 ou 3, caractérisé en ce que l'on sépare les polluants par voie électrochimique en introduisant des électrodes dans le liquide de lavage, l'anode étant en un métal lourd qui, en tant que cation, peut former avec le polluant à éliminer un composé difficilement soluble.

7. Procédé selon l'une quelconque des revendications 1 à 6 caractérisé en ce que l'on utilise de l'eau en tant que liquide de lavage.

8. Procédé selon l'une quelconque des revendications 2 ou 4, caractérisé en ce que l'on utilise en tant que liquide de lavage, dans le cas de l'utilisation d'un courant de gaz contenant en tant que polluants du chlore, du brome ou de l'iode, une solution neutre tamponnée de bromure de sodium.

9. Procédé selon l'une quelconque des revendications 1 à 8, caractérisé en ce que le liquide de lavage circule en totalité ou en partie en circuit fermé.

## Claims

1. Process for the separation of traces of gaseous contaminants based on sulfur and/or their compounds from waste gases by chemical absorption, characterized by passing the gas stream containing thiols and/or $H_2S$ in traces of already 11 ppm as contaminants through a neutral wash-liquid which contains heavy-metal ions capable of forming difficultly soluble compounds with the particular contaminants to be removed and regenerating the difficulty soluble heavy-metal compounds by adding ozone to the wash liquid.

2. Process for the separation of traces of gaseous contaminants based on halogen and/or sulfur and/or their compounds from waste gases by chemical absorption, characterized by passing the gas stream containing thiols, $H_2S$, HCl, HBr, HI, chlorine, bromine and/or iodine in traces of already 11 ppm as contaminants through a neutral wash-liquid into which electrodes are introduced the anode of which consisting of the heavy metal which as cation is capable of forming a difficulty soluble compound with the particular contaminant to be removed and electrochemically separating the contaminants.

3. Process according to claim 1, characterized by using silver or copper ions as heavy metal ions.

4. Process according to claim 2, characterized by using silver or copper ions as heavy metal ions.

5. Process according to claim 1 or 3, characterized by continuously supplying heavy metal salts or heavy metal ions respectively to the wash liquid.

6. Process according to one of the claims 1 or 3, characterized by electrochemically separating the contaminants by introducing into the wash liquid a pair of electrodes, the anode consisting of a heavy metal which as cation is capable of forming a difficultly soluble compound with the contaminant to be removed.

7. Process according to one of the precedent claims, characterized by using water as wash liquid.

8. Process according to one of the claims 2 or 4, characterized by using a neutral buffered solution of sodium bromide as wash liquid in case of using a gas stream containing chlorine, bromine or iodine as contaminants.

9. Process according to one of the precedent claims, characterized by completely or partly recirculating the wash liquid.

Abb.